(19) Europäisches Patentamt
European Patent Office
Office européen des brevets

(11) EP 1 039 994 B1

(12) FASCICULE DE BREVET EUROPEEN

(45) Date de publication et mention de la délivrance du brevet:
**11.01.2006 Bulletin 2006/02**

(21) Numéro de dépôt: **98958281.2**

(22) Date de dépôt: **30.11.1998**

(51) Int Cl.:
*B29D 11/00* (2006.01) *B29C 33/38* (2006.01)
*G02B 5/32* (2006.01) *G02B 1/10* (2006.01)

(86) Numéro de dépôt international:
**PCT/FR1998/002572**

(87) Numéro de publication internationale:
**WO 1999/029494 (17.06.1999 Gazette 1999/24)**

# (54) PROCEDE D'OBTENTION D'UNE LENTILLE OPHTALMIQUE COMPORTANT UNE MICROSTRUCTURE UTILITAIRE EN SURFACE ET LENTILLES OPHTALMIQUES AINSI OBTENUES

VERFAHREN ZUR HERSTELLUNG EINER OPTISCHEN LINSE MIT OBERFLÄCHENMIKROSTRUKTUR UND DIE SO HERGESTELLTEN LINSEN

METHOD FOR OBTAINING AN OPHTHALMIC LENS COMPRISING A SURFACE UTILITY MICROSTRUCTURE AND RESULTING OPHTHALMIC LENSES

(84) Etats contractants désignés:
**DE FR GB IT**

(30) Priorité: **11.12.1997 FR 9715712**

(43) Date de publication de la demande:
**04.10.2000 Bulletin 2000/40**

(73) Titulaire: **ESSILOR INTERNATIONAL COMPAGNIE GENERALE D'OPTIQUE**
**94227 Charenton cédex (FR)**

(72) Inventeurs:
- **KELLER, Gerhard**
  **F-94100 Saint Maur des Fosses (FR)**
- **DUFRESNE, Jean-François**
  **F-77680 Roissy en Brie (FR)**
- **MASSEY, Gilles**
  **F-94430 Chennevières sur Marne (FR)**
- **WHITE, Sidney, Shaw, Jr.**
  **Seminole, FL 33772 (US)**
- **BRALEY, Walter, Charles**
  **Seminole, FL 33776 (US)**
- **MORALES, Wilson, Basilio, Jr.**
  **St. Petersburg, FL 33710 (US)**
- **BOSMANS, Richard**
  **F-94880 Noiseau (FR)**

(74) Mandataire: **Catherine, Alain et al**
**Cabinet Harlé & Phélip**
**7, rue de Madrid**
**75008 Paris (FR)**

(56) Documents cités:

| | |
|---|---|
| EP-A- 0 353 748 | EP-A- 0 400 672 |
| WO-A-93/13933 | FR-A- 2 663 431 |
| FR-A- 2 699 541 | FR-A- 2 702 486 |
| FR-A- 2 734 827 | GB-A- 2 027 441 |
| US-A- 4 013 465 | US-A- 4 347 198 |
| US-A- 5 538 674 | US-A- 5 630 902 |

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 039 994 B1

## Description

La présente invention concerne, d'une manière générale, un procédé d'obtention d'une lentille ophtalmique comportant une microstructure utilitaire en surface, et plus particulièrement une microstructure anti-reflets.

A l'heure actuelle, le moyen le plus couramment utilisé pour conférer des propriétés anti-reflets à des lentilles ophtalmiques, en particulier en verre organique, consiste à déposer sur la lentille une couche ou un système de couches anti-reflets en matériaux minéraux. L'utilisation d'une telle couche anti-reflets en matériaux minéraux présente des inconvénients en ce qu'elle peut modifier les propriétés mécaniques de la lentille obtenue, et plus particulièrement peut modifier les propriétés anti-abrasives des couches dures anti-abrasives également déposées sur la lentille ophtalmique.

La réalisation de propriétés optiques à partir de microstructures en surface est un domaine connu dans le monde de l'optique. Ainsi, le document US-A-5 630 902 décrit le transfert d'une microstructure constituée d'éléments optiques diffractifs dans une couche d'un matériau photopolymérisable déposée sur un substrat en matière plastique par emboutissage, par exemple au moyen d'une matrice en quartz portant la microstructure voulue.

Le document US-A-4 013 465 décrit un procédé de réalisation d'une surface ayant une réflexion réduite vis-à-vis du rayonnement électromagnétique, qui consiste à appliquer sur une surface d'un substrat une couche d'un matériau photosensible, à exposer ce matériau à un motif régulier de rayonnement électromagnétique auquel il est sensible et à développer le matériau photosensible, de sorte que la topographie de la surface du matériau développée corresponde aux motifs lumineux, de manière à obtenir une surface ayant une réflexion réduite du rayonnement visible.

Le document GB-A-2 027 441 décrit un procédé de fabrication d'un article comprenant une couche ou corps mis en forme, en matériau plastique, monolithique, constitué de certains polymères réticulés et comportant une ou plusieurs surfaces portant une réplique d'une microstructure, qui consiste à remplir un moule maître portant la microstructure avec une composition fluide coulable, polymérisable par addition au moyen d'un rayonnement, réticulable, oligomérique, ayant à la fois des segments "durs" et "mous", et en exposant la composition coulée à un rayonnement actinique pour ainsi former l'article. Ce document précise que le terme microstructure recouvre des discontinuités, telles que des projections et des indentations, dans la surface, dont le profil varie à partir d'une ligne moyenne ou centrale passant à travers la microstructure de telle sorte que la somme des surfaces embrassées par le profil de surface au-dessus de la ligne soit égale à la somme des surfaces en dessous de la ligne, la ligne étant essentiellement parallèle à la surface normale (portant la microstructure) de l'article. La hauteur de ces déviations varie de $\pm$ 0,05 $\mu$m à $\pm$ 750 $\mu$m sur une longueur caractéristique représentative de la surface, par exemple 1 à 30 cm. Le profil moyen ou ligne centrale, peut être plan, concave, convexe, asphérique ou une combinaison de ces formes.

Des articles dans lesquels ces déviations sont d'ordre inférieur, c'est-à-dire de $\pm$ 0,005 $\mu$m à 0,1 $\mu$m ou, de préférence, de $\pm$ 0,05 $\mu$m, et ces déviations sont peu fréquentes ou d'apparition minimale, c'est-à-dire que la surface est libre de toute discontinuité significative, sont celles pour lesquelles la surface portant la microstructure est une surface "plate" ou "parfaitement lisse". De tels articles sont utiles, par exemple, comme éléments d'optique de précision ou éléments avec un interface optique de précision, tels que des lentilles ophtalmiques. Les articles pour lesquels ces déviations sont d'ordre inférieur mais d'occurence fréquente, sont ceux, par exemple, portant des discontinuités utilitaires, comme dans le cas d'articles ayant une microstructure anti-reflets. Les articles pour lesquels les déviations sont d'ordre élevé, c'est-à-dire de $\pm$ 0,1 $\mu$m à $\pm$ 750 $\mu$m, auxquels peut être attribuée une microstructure comprenant un ensemble de discontinuités utilitaires, qui sont identiques ou différentes, espacées ou contiguës, de manière aléatoire ou ordonnée, sont des articles tels que les feuilles rétroflectrices, des lentilles de Fresnel linéaires et des disques vidéo. En outre, ce document mentionne qu'il peut être nécessaire ou souhaitable de choisir les compositions oligomériques particulières dont le retrait au durcissement soit faible pour éviter l'apparition de discontinuités parasites interférant avec les discontinuités utilitaires.

Le brevet US-5,538,674 décrit un procédé de moulage d'un élément en matière plastique portant une microstructure qui consiste à fournir un moule-maître comportant une microstructure; couler un revêtement liquide sur le moule-maître et solidifier le revêtement pour former un outil de moulage rigide comportant la microstructure ; placer l'outil de moulage dans une machine de moulage ; introduire un élément en matière plastique dans la machine de moulage ; transférer la microstructure de l'outil de moulage à l'élément en matière plastique ; et retirer l'élément moulé en matière plastique de la machine de moulage.

Le brevet US-4,013,465 décrit un procédé de production d'une surface ayant une réflectance réduite vis-à-vis du rayonnement électromagnétique pour une bande de longueur d'onde prédéterminée qui comprend l'agencement sur la surface d'un réseau régulier de protubérances ayant une hauteur qui n'est pas inférieure à un tiers de la longueur de la plus grande longueur d'onde de la bande et un espacement qui est inférieure à la longueur de la plus courte longueur d'onde de la bande divisée par l'indice de réfraction du matériau des protubérances. Le réseau de protubérances peut être réalisé en déposant une couche d'un matériau photosensible, exposant le matériau à un motif régulier de rayonnement électromagnétique et en développant le matériau photosensible.

La présente invention a donc pour objet un procédé d'obtention d'une lentille ophtalmique, c'est-à-dire un article ayant une géométrie correctrice de la vue, comportant en surface une microstructure utilitaire, c'est-à-dire ayant des

propriétés optiques, en particulier des propriétés anti-reflets, la géométrie de la microstructure utilitaire étant initialement déterminée par un procédé interférentiel.

La présente invention a également pour objet les lentilles ainsi obtenues comportant une surface à géométrie correctrice de la vue, pourvue d'une microstructure utilitaire , ayant des propriétés anti-reflets, dont la géométrie est initialement déterminée par un procédé interférentiel.

Cette microstructure utilitaire est réalisée dans une couche fonctionnelle superficielle de la lentille ophtalmique qui, après durcissement, constitue un revêtement dur ayant des propriétés de résistance à l'abrasion.

Selon l'invention, le procédé d'obtention d'une lentille ophtalmique comportant en surface une microstructure utilitaire anti-reflets comprend une étape de transfert de la microstructure à partir d'un moule dont une surface interne porte la microstructure et possède une géométrie correctrice de la vue, la géométrie de la microstructure étant initialement déterminée par un procédé interférentiel, et l'étape de transfert consiste à :

- former dans le moule une couche d'un premier matériau optique durcissable dont une surface porte une réplique de la microstructure portée par la face interne du moule ;
- faire durcir dans le moule la couche durcie du premier matériau optique,
  l'étape de transfert étant caractérisée en ce que ledit premier matériau optique forme, après durcissement, un revêtement dur ayant des propriétés de résistance à l'abrasion, et en ce qu'elle consiste en outre à:

  - introduire entre la surface de la couche durcie du premier matériau optique, opposée à la surface portant la microstructure et une paroi du moule, un second matériau optique durcissable ;
  - faire durcir le second matériau optique ; et
  - désassembler le moule pour récupérer une lentille ophtalmique comportant un substrat formé du second matériau optique dont une surface est recouverte de la couche durcie du premier matériau optique portant la microstructure utilitaire.

De préférence, la surface à géométrie correctrice de la vue est une surface à géométrie progressive. En général, la courbure de la surface à géométrie progressive du moule a un rayon de courbure mesuré en un point quelconque de la surface correctrice compris entre 40 mm et 100 mm.

On peut utiliser dans le procédé de la présente invention tous types de moulage classiques pour la fabrication de lentilles ophtalmiques, tels que le moulage direct, par exemple au moyen d'un moule intégral ou au moyen d'un moule composite à élément rapporté ou à insert, ou encore par surmoulage, et les moulages dits "par transfert", par exemple par emboutissage, ou par la méthode bien connue dans l'optique ophtalmique du transfert par "revêtement dans le moule" ("In-Mold Coating").

Dans une première réalisation de l'invention, le moule utilisé est un moule intégral, c'est-à-dire que la microstructure utilitaire est formée directement dans une surface interne du moule possédant la géométrie correctrice de la vue requise. Le moule peut être en matière plastique, en verre minéral ou en métal, en particulier en nickel.

Dans une seconde réalisation de l'invention, le moule est un moule composite qui comprend un élément rapporté ayant une surface dans laquelle est formée la microstructure utilitaire, cet élément rapporté épousant la surface du moule présentant la géométrie correctrice de la vue, de sorte que la surface de l'élément rapporté comportant la microstructure utilitaire ait également la géométrie correctrice de la vue voulue. L'élément rapporté peut être initialement conformé pour présenter la géométrie correctrice de la vue voulue et être fixé à la surface correspondante du moule, par exemple au moyen d'un adhésif. L'élément rapporté peut également avoir initialement une forme plane et être ensuite déformé pour épouser la surface à géométrie correctrice de la vue du moule. Dans ce dernier cas, l'élément rapporté peut également se fixer à la surface à géométrie correctrice de la vue du moule au moyen d'un adhésif. Lorsque l'élément rapporté portant la microstructure est un élément en matière plastique destiné à être appliqué sur une surface d'un moule, cet élément doit posséder un minimum d'élasticité dans le plan pour pouvoir être convenablement appliqué. Des éléments appropriés de ce type sont des éléments en polyuréthanne ayant par exemple un module d'Young mesuré à 30°C de 1,2 Giga Pascals. De manière générale, les éléments appropriés ont un module d'Young inférieur à 2,5 Giga Pascals.

Enfin, l'élément rapporté peut être constitué par une couche de matériau, tel qu'une matière plastique formée directement sur une surface d'un substrat.

Dans une troisième réalisation de l'invention, le moule est un moule composite qui comprend un insert plan pourvu sur une de ses surfaces de la microstructure utilitaire, cet insert plan étant déformé dans le moule pour épouser la surface à géométrie correctrice de la vue du moule par application dans le moule d'une pression ou d'un vide.

On peut utiliser dans le procédé d'obtention de lentilles ophtalmiques selon l'invention, tous matériaux ou compositions optiques, durcissables thermiquement ou au moyen d'un rayonnement actinique, en particulier au moyen d'un rayonnement UV, qui peut être coulé ou injecté dans le moule, et qui conduit à des lentilles ophtalmiques ayant la transparence optique voulue et les propriétés mécaniques voulues. Ces matériaux ou compositions optiques comprennent non seulement les matériaux et compositions servant à fabriquer la lentille ophtalmique elle-même, mais également les matériaux et compositions permettant le dépôt de couches fonctionnelles particulières sur une lentille ophtalmique, tels que les matériaux destinés à la formation d'une couche anti-abrasion sur une lentille ophtalmique.

De préférence, le matériau ou la composition optique est un matériau thermoplastique ou une composition liquide de monomères durcissables thermiquement ou au moyen d'un rayonnement actinique. Les compositions liquides de monomères sont particulièrement recommandées dans le procédé de l'invention.

Parmi les monomères utiles dans les compositions de monomères optiques utilisables dans le procédé de la présente invention, on peut citer les (méth)acrylates d'alkyle, en particulier les (méth)acrylates d'alkyle en $C_1$-$C_4$ tels que le méthyl(méth)acrylate et l'éthyl(méth)acrylate, les dérivés allyliques tels que les allyl carbonates de polyols aliphatiques ou aromatiques, linéaires ou ramifiés et les dérivés thio(méth)acryliques.

Des monomères particulièrement recommandés dans le procédé de l'invention sont les allyl carbonates de polyols parmi lesquels on peut citer l'éthylèneglycol bis allyl carbonate, le diéthylène glycol bis 2-méthyl carbonate, le diéthylène glycol bis(allyl carbonate), l'éthylène glycol bis (2-chloro allyl carbonate), le triéthylène glycol bis(allyl carbonate), le 1,3-propane diol bis(allyl carbonate), le propylène glycol bis (2-éthyl allyl carbonate), le 1,3-butane diol bis(allyl carbonate), le 1,4-butane diol bis (2-bromo allyl carbonate), le dipropylène glycol bis(allyl carbonate), le triméthylène glycol bis(2-éthyl allyl carbonate), le pentaméthylène glycol bis(allyl carbonate), l'isopropylène bisphénol-A bis(allyl carbonate). Un monomère particulièrement recommandé est le diéthylène glycol bis(allyl carbonate).

Une autre classe de monomères convenant pour les compositions utilisables dans le procédé de la présente invention, comprend les (méth) acrylates aromatiques polyéthoxylés tels que les bis phénol-A diméthacrylate polyéthoxylés, en particulier ceux décrits dans la demande de brevet français FR-A-2 699 541.

On peut également utiliser les monomères thio(méth) acryliques, en particulier ceux décrits dans la demande de brevet français FR-A-2 734 827.

On peut également utiliser des compositions à base de polythiols et de polyisocyanates sous forme monomérique, conduisant à des polythiouréthannes tels que décrits notamment dans le brevet US 4 689 387.

Enfin, on peut utiliser des compositions renfermant un ou plusieurs monomères di- ou polythiol avec un ou plusieurs monomères porteurs de groupements insaturés réactifs avec des fonctions thiols, tels que les groupements vinyliques, (méth)acryliques et thio(méth) acryliques.

Bien évidemment, les compositions de monomères peuvent comprendre des mélanges des monomères ci-dessus.

On a remarqué que plus l'indice de réfraction de la couche comportant la microstructure est élevé, plus l'effet anti-reflet est prononcé. De ce fait, l'indice de la couche microstructurée est de préférence égal ou supérieur à 1,55, mieux égal à 1,6 ou plus. Il est bien évident que cette couche microstructurée peut être constituée par le verre organique ou par une couche superficielle telle qu'un revêtement anti-abrasion déposée sur une surface d'un substrat en verre organique.

Parmi les matériaux thermoplastiques utiles dans le procédé de l'invention, on peut citer les prépolymères et polymères thermoplastiques tels que les polycarbonates thermoplastiques.

Selon le procédé de l'invention, la microstructure utilitaire est impartie, non pas dans la lentille ophtalmique elle-même, mais dans un revêtement fonctionnel anti-abrasion déposé sur cette lentille. On peut utiliser dans le procédé de la présente invention, toutes compositions de monomères durcissables convenant pour former sur une lentille ophtalmique une couche anti-abrasion.

Parmi ces compositions durcissables résistant à l'abrasion, on peut citer les compositions à base d'hydrolysat de silane, en particulier d'hydrolysat d'époxysilane telles que celles décrites dans la demande de brevet français n° 93 026 49, et les compositions à base de dérivés acryliques.

Bien évidemment, les matériaux et compositions optiques utiles dans le procédé de la présente invention peuvent comporter tous adjuvants classiquement utilisés dans la fabrication des lentilles ophtalmiques, et en particulier des initiateurs et catalyseurs de polymérisation thermique et/ou photochimique.

Comme indiqué, la géométrie de la microstructure utilitaire est initialement déterminée par un procédé interférentiel, c'est-à-dire que la microstructure utilitaire est soit formée directement sur la surface du moule par un procédé interférentiel, soit est obtenue par transfert à partir d'une matrice dont une surface comporte une microstructure utilitaire obtenue par un procédé interférentiel.

Plus précisément, le procédé interférentiel consiste à réaliser une figure de franges d'interférences par superposition de deux ondes lumineuses cohérentes, par exemple deux faisceaux lasers, et à irradier une couche de matériau photosensible déposée sur un substrat au moyen de cette figure de franges d'interférences.

En développant ensuite, de manière classique, la couche de matériau photosensible, on obtient une microstructure périodique.

On peut prévoir deux étapes d'irradiation de la couche photosensible en ayant fait tourner le substrat, de préférence de 90° après la première étape d'irradiation, et on développe ensuite de manière classique la couche de matériau photosensible.

On obtient alors une microstructure périodique dans le plan. On peut ainsi obtenir une structure isotrope dont les propriétés anti-reflets sont indépendantes de l'angle de vision.

Bien évidemment, on peut utiliser des figures de franges d'interférence ayant des pas (i) et des amplitudes (2A) différentes ou identiques. On peut également répéter plusieurs fois les étapes d'irradiations pour ainsi obtenir après développement une microstructure finale constituée de plusieurs microstructures superposées.

Généralement, la longueur d'onde des faisceaux lumineux cohérents, par exemple des faisceaux lasers, est comprise entre 170 et 510 nm et le pas de la figure de franges d'interférences (et par conséquent de la microstructure périodique obtenue) est compris entre 100 et 300 nm. L'amplitude 2A est généralement comprise entre 100 et 300 nm.

De préférence, on utilise des ondes lumineuses planes, et on obtient ainsi une microstructure sinusoïdale.

La microstructure périodique peut être définie dans un repère orthonormé (x, y, z) de manière générale par l'équation (1) suivante :

$$z = f(x,y) = \sum_{n=1}^{k} \left[A_n \sin\left(2\Pi n \frac{x}{i}\right) + B_n \cos\left(2\Pi n \frac{x}{i}\right)\right] + \sum_{m=1}^{k} \left[C_m \sin\left(2\Pi m \frac{y}{i}\right) + D_m \cos\left(2\Pi m \frac{y}{i}\right)\right] \qquad (I)$$

où $A_n$, $B_n$ sont les coefficients de Fourier de la microstructure dans la direction x ;
$C_m$, $D_m$ sont les coefficients de Fourier de la microstructure dans la direction y ; et
i est le pas (période) de la microstructure.

De préférence, on considère $B_n = D_m = o$, $A_n = C_m = A$ (structure sinusoïdale)
et la figure de franges d'interférences et par conséquent la microstructure peut être représentée par l'équation (2) :

$$z = f(x,y) = A\left[\sin\left(2\Pi \frac{x}{i}\right) + \sin\left(2\Pi \frac{y}{i}\right)\right] \qquad (2)$$

où i est la période et A la demi amplitude.

On a représenté, à la figure 1, un système de franges d'interférences sinusoïdales croisées à 90°.

Tout ce qui a été défini précédemment concerne le cas où la figure de franges d'interférences est supportée par une surface plane.

Dans le cas d'une surface courbe, la microstructure est légèrement déformée par rapport à la figure d'interférence mais ne comporte pas de discontinuité abrupte.

En particulier, le pas i de la microstructure peut sensiblement varier en fonction de la situation sur la surface correctrice.

On peut éliminer cette déformation en créant une figure de franges d'interférences elle-même modifiée pour tenir compte de la courbure de la surface devant porter la microstructure.

Afin d'éviter que les creux de la microstructure utilitaire, et en particulier anti-reflets, retiennent les salissures et les graisses, on peut combler les creux de cette microstructure avec un matériau d'indice de réfraction inférieur à celui de la microstructure. La différence d'indice des deux matériaux est de préférence supérieure ou égale à 0,1.

On choisira de préférence comme matériau anti-salissures un matériau hydrophobe.

Un matériau anti-salissures convenable répond à la formule :

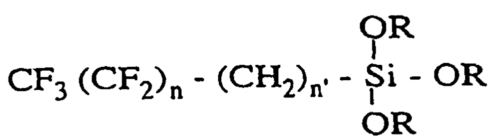

où R est un radical alkyle, par exemple en $C_1$-$C_6$,
et n et n' sont des entiers pouvant varier indépendamment de 0 à 6.

La suite de la description se réfère aux figures annexées, qui représentent respectivement :

Figure 1 - une représentation théorique d'un système de franges d'interférences sinusoïdales croisées à 90° utilisable pour former la microstructure selon l'invention ;
Figure 2 - une vue schématique d'un moule intégral utilisable dans un procédé d'obtention d'une lentille ophtalmique selon l'invention ;
Figure 3 - une vue schématique d'un moule à éléments rapportés utilisable dans le procédé d'obtention d'une lentille ophtalmique selon l'invention ;
Figure 4 - une vue schématique d'un moule comportant un insert déformable, utilisable dans le procédé d'obtention d'une lentille selon l'invention ;
Figure 5 - une vue schématique d'un moule utilisable pour l'obtention d'une lentille ophtalmique selon l'invention, par un procédé de « revêtement dans le moule » (In-Mold Coating) ; et
Figure 6 - un graphe du pourcentage de réflexion d'une lentille microstructurée selon l'invention et d'une lentille classique (sans microstructure) en fonction de la longueur d'onde de la lumière.

Sur les figures, les mêmes éléments sont identifiés par les mêmes numéros de référence.
En se référant aux figures 2 à 4, la fabrication de lentilles ophtalmiques en verre organique peut se faire par moulage entre deux parties 2, 4 d'un moule 1, reliées par des éléments de fixation 5. Un matériau ou une composition optique est alors introduit dans l'assemblage du moule par un orifice 6, soit par coulage, soit par injection, et y est durci ou polymérisé pour, après désassemblage du moule, obtenir une lentille ophtalmique. Généralement, au moins une des parties du moule 2, 4 comporte une surface interne, par exemple la surface 3, ayant une géométrie correctrice de la vue.
Selon l'invention, comme le montrent les figures 2 et 3, la face interne 3 ou 3' d'une partie 2 du moule est pourvue d'une microstructure utilitaire c'est-à-dire ayant des propriétés optiques, de préférence des propriétés anti-reflets.
Dans la réalisation représentée à la figure 2, la partie de moule 2, dont la surface 3 comporte la microstructure utilitaire, est formée directement dans la partie de moule. La partie de moule comporte la surface microstructurée à géométrie correctrice en métal, par exemple en nickel, ou en matière plastique. La géométrie de cette microstructure est initialement déterminée par un procédé interférentiel, par exemple en utilisant la figure de franges d'interférences représentée à la figure 1.
Une première méthode pour réaliser une partie de moule intégral pourvue d'une surface microstructurée à géométrie correctrice consiste à réaliser une matrice métallique, par exemple en nickel, par galvanoplastie comme décrit ci-dessus. Si la matrice est suffisamment épaisse on peut l'utiliser directement comme partie de moule.
Une deuxième méthode pour réaliser une partie de moule intégral, pourvue d'une surface microstructurée à géométrie correctrice consiste à déposer sur une surface à géométrie correctrice de la vue d'un substrat de verre minéral une couche de résine photosensible, et par le procédé interférentiel précédemment décrit, à y former la microstructure voulue. Par bombardement plasma-isotrope (par exemple un plasma argon-$CHF_3$) de la couche durcie, on transfère la microstructure dans le substrat en verre. Un tel procédé de transfert est décrit dans le brevet FR-A-2 663 431.
Une troisième méthode pour réaliser une partie de moule intégral consiste à effectuer le moulage d'une partie de moule à partir d'un moule dont une des parties comporte une microstructure utilitaire initialement réalisée par un procédé interférentiel.
Il est également possible de former directement la microstructure utilitaire sur une surface d'une partie d'un moule composite à géométrie correctrice. Dans ce cas, on dépose une couche de résine photosensible sur la surface à géométrie correctrice de la partie de moule, et par le procédé décrit précédemment qui consiste à former des interférences lumineuses sur la résine puis à développer celles-ci, on obtient le motif de microstructure souhaité dans la résine.
Une méthode pour obtenir une partie de moule composite dont une partie a une surface à géométrie correctrice microstructurée, est la duplication par polymérisation. Sur une surface à géométrie correctrice d'un substrat, on dépose une couche d'une résine polymérisable. On vient ensuite mettre en contact étroit le substrat enduit avec une surface microstructurée d'une matrice, par exemple en métal (nickel), par exemple par application de vide ou par pressage. Après polymérisation soit thermique, soit photochimique (rayonnement UV) au travers du substrat enduit (selon la nature de la couche de résine) et désassemblage, on obtient une partie de moule formée d'un substrat dont une surface à géométrie correctrice est pourvue de la microstructure utilitaire voulue.
La figure 3 représente le cas où la microstructure utilitaire est portée par un élément rapporté 2' dont une surface 3' est pourvue de la microstructure utilitaire. Cet élément rapporté, qui peut être en métal, par exemple en nickel, ou en matière plastique, peut être obtenu comme indiqué précédemment. Etant donné qu'il doit être fixé sur une surface de la partie 2 de moule ayant une géométrie correctrice de la vue, il peut être soit mis en forme préalablement à la géométrie voulue, soit être déformé, par exemple par emboutissage, au moment de son installation sur la partie 2 de moule pour se conformer à la géométrie de cette partie. Généralement, cet élément rapporté 2' est fixé à la surface 3 de la partie 2 de moule au moyen d'un adhésif.

L'obtention d'une lentille ophtalmique microstructurée selon l'invention s'effectue généralement simplement par coulage dans le moule par l'orifice d'introduction 6 d'une composition liquide de monomères optiques ou par injection d'un matériau thermoplastique optique. Après désassemblage du moule, on récupère une lentille ophtalmique ayant une surface portant une microstructure utilitaire, en particulier ayant des propriétés anti-reflets.

On a représenté sur la figure 4 une autre réalisation d'un moule utilisable dans le procédé de l'invention, qui se caractérise par le fait qu'il comprend un insert plan 2' déformable, pourvu sur l'une de ses surfaces d'une microstructure utilitaire 3', de préférence ayant des propriétés anti-reflets. Cet insert plan 2' peut être déformé lors du moulage de la lentille ophtalmique, par création d'un vide dans le moule 1 sur la surface de l'insert opposée à la surface 3' portant la microstructure, de manière à épouser la géométrie de la surface 3 de la partie de moule 2, généralement une géométrie correctrice de la vue. En variante, cet insert 2' peut être déformé par la pression exercée par la composition liquide de monomères coulée dans le moule par l'orifice d'introduction 6 ou par le matériau thermoplastique optique injecté dans le moule par cet orifice 6, de manière là encore, à épouser la face à géométrie correctrice de la vue de la partie 2 du moule.

L'insert déformable 2'peut être un insert en matière plastique ou métallique, de préférence métallique, par exemple en nickel.

Un avantage de l'utilisation d'un tel moule dans le procédé de l'invention est qu'on peut former sur une bande plane plusieurs inserts de microstructures analogues ou différentes, découper ces inserts et les utiliser dans le moule en fonction de la microstructure voulue. En outre, ces inserts peuvent être jetés et remplacés facilement.

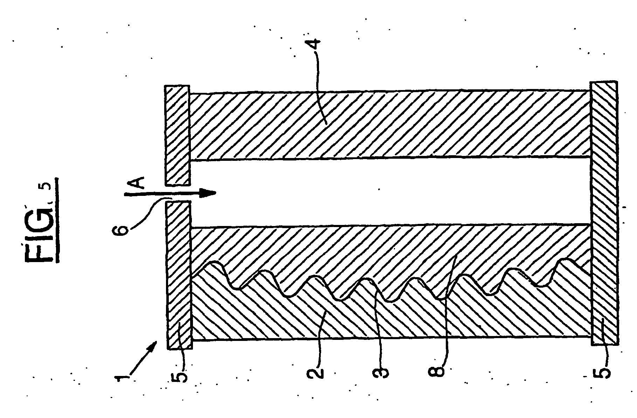

On a représenté à la figure 5 un procédé d'obtention de lentilles ophtalmiques selon l'invention, par moulage par transfert.

La figure 5 concerne la technique de revêtement "dans le moule" (In-Mold Coating) bien connue dans la technique de fabrication des lentilles ophtalmiques.

Dans cette technique, une couche 8 d'un matériau optique, selon l'invention, une couche de matériau dur anti-abrasion, est formée sur la partie 2 de moule comportant une face 3 à géométrie correctrice de la vue et pourvue d'une microstructure utilitaire. Ainsi, la microstructure de la partie de moule 2 se trouve transférée directement dans la couche 8. Ensuite, on introduit par l'orifice 6 du moule, par coulage ou injection, une composition ou un matériau optique que l'on fait durcir ou polymériser, soit thermiquement, soit sous l'effet d'un rayonnement actinique, par exemple un rayonnement UV. Après désassemblage du moule, on obtient une lentille ophtalmique comportant sur un substrat optiquement transparent une couche optiquement transparente microstructurée ayant la géométrie correctrice voulue.

Il est bien entendu que les parties de moule peuvent avoir toutes formes appropriées, en particulier convexe, concave ou autres, selon la géométrie correctrice voulue.

Bien évidemment, les matériaux constituant les parties de moule seront choisis en fonction du procédé de polymérisation ou durcissement des compositions et matériaux optiques utilisés pour fabriquer la lentille ou la couche fonctionnelle sur la lentille. Ainsi, on utilisera des parties de moule en matière plastique transparente dans le cas d'une polymérisation ou durcissement au moyen d'un rayonnement actinique.

Les exemples suivants illustrent la présente invention.

<u>Exemple 1</u> : Réalisation d'une lentille anti-réflexion en dicarbonate de diallyl diglycol, résistant à l'abrasion par un procédé de revêtement dans le moule (In-Mold Coating).

Un élément rapporté en nickel ayant une surface pourvue d'une microstructure de type périodique résultant initialement d'un procédé interférentiel, est collé sur une face interne d'une partie d'un moule en verre.

Le moule obtenu est nettoyé avec de l'acétone puis traité avec une solution de fluorohydrocarbure (HCFC) contenant 0,26% de matière solide E-349, un agent de démoulage commercialisé par la Société Chem-Trend Inc.

La face microstructurée de la partie de moule est revêtue par trempage d'une couche d'une composition de revêtement obtenue par hydrolyse d'alcoxysilane incluant du glycidoxy propyl triméthoxysilane, du méthyl triméthoxysilane, de l'acide itaconique et de la silice colloïdale.

La composition de revêtement est prédurcie jusqu'à un stade "hors poussière", c'est-à-dire qu'elle n'est plus collante ou poisseuse.

La partie du moule revêtue sur sa face interne de la microstructure est utilisée pour mouler la face avant de la lentille et la partie de moule en verre minéral classique (sans microstructure) est utilisée pour mouler la face arrière de la lentille.

Les deux parties de moule sont assemblées et maintenues à distance par un joint et un clip de fixation assure le maintien de l'ensemble.

Le moule est alors rempli avec du diallyl diglycol dicarbonate (de la Société PPG) renfermant comme catalyseur du diisopropyl peroxy dicarbonate (également disponible auprès de la Société PPG).

La composition monomérique est alors durcie thermiquement.

A la fin du cycle de durcissement thermique, on désassemble le moule avec un outil approprié et l'on obtient une lentille qui présente des propriétés de résistance à l'abrasion et des propriétés anti-reflets, toutes deux supérieures

à une lentille non revêtue obtenue à partir d'un moule en verre minéral classique (sans microstructure).

Exemple 2 : Réalisation d'une lentille anti-reflet, d'indice de réfraction 1,6, en polythiouréthanne et résistant à l'abrasion par un procédé de revêtement dans le moule (In-Mold Coating).

Un élément rapporté en nickel pourvu sur une face d'une microstructure périodique résultant initialement d'un procédé interférentiel, est collé sur une surface d'une partie d'un moule en verre minéral. Le moule est nettoyé comme dans l'exemple 1.

Une composition de revêtement, comme décrit à l'exemple 3 du brevet FR-A-93 02649 (hydrolysat de glycidoxy propyl triméthoxy silane, diméthyl diéthoxy silane et silice colloïdale), est déposée sur la surface microstructurée par trempage en utilisant une machine de revêtement au trempé de laboratoire.

Le revêtement est prédurci à l'état "hors poussière" à une température de 80°C pendant 15 minutes. La partie de moule ainsi revêtue est utilisée pour mouler la face avant de la lentille et la partie de moule en verre minéral classique (sans microstructure) est utilisée pour mouler la face arrière de la lentille.

Les deux parties de moule sont assemblées et maintenues à distance par un joint et un clip de fixation assure le maintien de l'ensemble.

Le moule est alors rempli de monomère MR6® (commercialisé par la Société Mitsui-Toatsu) contenant du dibutyl-étain comme catalyseur. La composition monomérique est alors durcie pour obtenir une lentille de polyuréthanne d'indice de réfraction 1,6 en utilisant le cycle de durcissement thermique dans l'air suivant :

| Temps (minute) | Température (°C) |
|---|---|
| O | 20 |
| 1 | 32 |
| 25 | 32 |
| 33 | 60 |
| 35 | 80 |
| Enlèvement du joint. | |
| 37 | 120 |
| 39 | 120 |
| 41 | 75 |

A la fin du cycle de durcissement, le moule est désassemblé en utilisant un outil approprié pour obtenir, après un post-durcissement à 110°C pendant 3 heures, une lentille ayant des propriétés de résistance aux rayures dans l'essai de la laine d'acier et anti-reflets supérieures à celles d'une lentille non revêtue préparée par un procédé analogue.

Exemple 3

On répète l'exemple 2, mais en utilisant une composition de revêtement à base d'hydrolysat d'époxysilane renfermant du titane colloïdal.

On obtient une lentille ayant des propriétés similaires à celles de l'exemple 2.

Exemple 4 : Réalisation d'un moule en matière plastique diallyl diglycol dicarbonate pourvu d'une microstructure de type périodique.

On nettoie un moule analogue à celui de l'exemple 1 avec de l'acétone. En procédant comme dans l'exemple 1, on remplit le moule avec une composition de diallyl diglycol dicarbonate contenant du triallyl cyanurate et catalysé avec du peroxy dicarbonate d'isopropyle commercialisé par PPG Industries. On fait durcir la composition au moyen du cycle de durcissement thermique suivant :

| Temps (minute) | Température (°C) |
|---|---|
| 15 | 46 |
| 45 | 46 |
| 30 | 49 |
| 60 | 49 |
| 60 | 54 |

Suite de tableau

| Temps (minute) | Température (°C) |
|---|---|
| 45 | 54 |
| 45 | 58 |
| 120 | 58 |
| 45 | 62,5 |
| 45 | 62,5 |
| 60 | 67,5 |
| 45 | 67,5 |
| 60 | 72 |
| 45 | 72 |
| 60 | 78 |
| 60 | 78 |

A la fin du cycle de durcissement, le moule est désassemblé au moyen d'un outil approprié pour obtenir un substrat pourvu d'une face microstructurée.

## Revendications

**1.** Procédé d'obtention d'une lentille ophtalmique comportant en surface une microstructure utilitaire anti-reflets, ledit procédé comprenant une étape de transfert de la microstructure dans une surface de la lentille à partir d'un moule (1) dont une surface interne (3, 3') porte la microstructure et possède une géométrie correctrice de la vue, la géométrie de la microstructure étant initialement déterminée par un procédé interférentiel,
le transfert consistant à :

- former dans le moule une couche d'un premier matériau optique durcissable dont une surface porte une réplique de la microstructure portée par la face interne du moule, ledit premier matériau optique formant, après durcissement, un revêtement dur ayant des propriétés de résistance à l'abrasion ;
- faire durcir dans le moule la couche du premier matériau optique ;
- introduire entre la surface de la couche durcie du premier matériau optique, opposée à la surface portant la microstructure et une paroi du moule, un second matériau optique durcissable ;
- faire durcir le second matériau optique ; et
- désassembler le moule pour récupérer une lentille ophtalmique comportant un substrat formé du second matériau optique dont une surface est recouverte de la couche durcie du premier matériau optique portant la microstructure utilitaire.

**2.** Procédé selon la revendication 1, dans lequel la géométrie de la microstructure est périodique.

**3.** Procédé selon la revendication 2, dans lequel la microstructure périodique a une période comprise entre 100 et 300 nm.

**4.** Procédé selon l'une quelconque des revendications 1 à 3, dans lequel la surface géométrique correctrice de la vue est une surface à géométrie progressive.

**5.** Procédé selon l'une quelconque des revendications 1 à 4, dans lequel le rayon de courbure de la surface est compris entre 40 et 100 mm.

**6.** Procédé selon l'une quelconque des revendications 1 à 5, dans lequel le moule est un moule intégral et la microstructure est formée directement dans la surface interne du moule possédant la géométrie correctrice.

**7.** Procédé selon la revendication 6, dans lequel le moule est en matière plastique, en métal ou en verre minéral.

**8.** Procédé selon l'une quelconque des revendications 1 à 5, dans lequel le moule est un moule composite au moins bicouche dont l'une porte à sa surface la microstructure utilitaire.

9. Procédé selon l'une quelconque des revendications 1 à 5, dans lequel la microstructure est formée sur une face d'un élément rapporté, ledit élément rapporté épousant la surface du moule présentant la géométrie correctrice de la vue.

10. Procédé selon la revendication 9, dans lequel l'élément rapporté a une forme correspondant à celle de la surface de géométrie correctrice de la vue du moule et est fixé à cette surface.

11. Procédé selon la revendication 9, dans lequel l'élément rapporté a une forme initialement plane et est déformé pour épouser la surface géométrique correctrice du moule.

12. Procédé selon la revendication 10 ou 11, dans lequel l'élément rapporté est fixé à la surface géométrique correctrice du moule au moyen d'un adhésif.

13. Procédé selon la revendication 8, dans lequel la couche microstructurée est formée par application d'une couche de matériau sur la surface du moule à géométrie correctrice, ledit matériau étant apte à permettre le développement d'une microstructure sur sa surface opposée à la surface à géométrie correctrice du moule.

14. Procédé selon l'une quelconque des revendications 1 à 13, dans lequel la couche du premier matériau optique durcissable est obtenue par application sur le moule d'une composition liquide de monomères optiques.

15. Procédé selon l'une quelconque des revendications 1 à 13, dans lequel la couche du premier matériau optique durcissable est formée par injection d'un matériau thermoplastique.

16. Procédé selon l'une quelconque des revendications 9 à 12, dans lequel la microstructure est formée sur une face d'un insert plan déformable, ledit insert étant déformé dans le moule pour épouser la surface à géométrie correctrice du moule.

17. Procédé selon la revendication 16, dans lequel l'insert est déformé dans le moule par création d'un vide sur une face de l'insert opposée à la face de l'insert portant la microstructure utilitaire.

18. Procédé selon la revendication 16, dans lequel l'insert est déformé dans le moule par création d'une pression sur la face de l'insert portant la microstructure utilitaire.

19. Procédé selon la revendication 18, dans lequel la pression est la pression de coulage du second matériau optique.

20. Procédé selon la revendication 18, dans lequel la pression est la pression d'injection du second matériau.

21. Procédé selon l'une quelconque des revendications précédentes, dans lequel le substrat formé du second matériau optique durcissable est obtenu par coulage d'une composition liquide de monomères optiques ou par injection d'un matériau thermoplastique optique.

22. Lentille ophtalmique comportant une microstructure utilitaire anti-reflets initialement déterminée par un procédé interférentiel, impartie dans une surface de la lentille ayant une géométrie correctrice de la vue, **caractérisée en ce que** la surface comportant la microstructure utilitaire est une surface d'une couche résistant à l'abrasion.

23. Lentille selon la revendication 22, dans laquelle la surface comportant la microstructure utilitaire a un indice de réfraction égal ou supérieur à 1,55, de préférence égal ou supérieur à 1,6.

## Patentansprüche

1. Verfahren zum Erlangen einer ophthalmischen Linse, die an der Oberfläche eine Antireflexmikrostruktur aufweist, wobei das Verfahren umfasst einen Schritt des Übertragens der Mikrostruktur von einer Form (1), von der eine interne Oberfläche (3, 3') die Mikrostruktur trägt und eine Sichtkorrekturgeometrie besitzt, an eine Oberfläche der Linse, wobei die Geometrie der Mikrostruktur initial durch ein Interferenzverfahren bestimmt ist,
wobei die Übertragung darin besteht:

- Ausbilden einer Schicht eines ersten härtbaren, optischen Materials, von dem eine Oberfläche eine Replik

der von der internen Fläche der Form getragenen Mikrostruktur trägt, in der Form, wobei das erste optische Material nach dem Härten eine harte Beschichtung ausbildet, die abriebfeste Eigenschaften hat;
- Härten lassen der Schicht des ersten optischen Materials in der Form;
- Einführen eines zweiten härtbaren, optischen Materials zwischen der Oberfläche der gehärteten Schicht des ersten optischen Materials, die der die Mikrostruktur tragenden Oberflächen entgegengesetzt ist, und einer Wandung der Form;
- Härten lassen des zweiten optischen Materials; und
- Auseinandernehmen der Form, um eine ophthalmische Linse zu erhalten, die ein Substrat aufweist, das aus dem zweiten optischen Material gebildet ist, von dem eine Oberfläche mit der gehärteten Schicht des ersten optischen Materials überzogen ist, die die Mikrostruktur trägt.

2. Verfahren nach Anspruch 1, wobei die Geometrie der Mikrostruktur periodisch ist.

3. Verfahren nach Anspruch 2, wobei die periodische Mikrostruktur einer zwischen 100 und 300 nm enthaltene Periode hat.

4. Verfahren nach irgendeinem der Ansprüche 1 bis 3, wobei die Sichtkorrekturgeometrieoberfläche eine Oberfläche mit progressiver Geometrie ist.

5. Verfahren nach irgendeinem der Ansprüche 1 bis 4, wobei der Krümmungsradius der Oberfläche enthalten ist zwischen 40 und 100 mm.

6. Verfahren nach irgendeinem der Ansprüche 1 bis 5, wobei die Form eine Integralform ist und die Mikrostruktur direkt an der internen Oberfläche der Form ausgebildet ist, die die Korrekturgeometrie besitzt.

7. Verfahren nach Anspruch 6, wobei die Form aus Kunststoff, Metall oder Mineralglas ist.

8. Verfahren nach irgendeinem der Ansprüche 1 bis 5, wobei die Form eine mehrteilige Form mit zumindest zwei Schichten ist, von denen eine an ihrer Oberfläche die Mikrostruktur trägt.

9. Verfahren nach irgendeinem der Ansprüche 1 bis 5, wobei die Mikrostruktur an einer Fläche eines angebrachten Elements ausgebildet ist, wobei sich das angebrachte Element an die Oberfläche der Form, die die Sichtkorrekturgeometrie aufweist, anschmiegt.

10. Verfahren nach Anspruch 9, wobei das angebrachte Element eine Form hat, die jener der Sichtkorrekturgeometrieoberfläche der Form entspricht, und an dieser Oberfläche festgelegt ist.

11. Verfahren nach Anspruch 9, wobei das angebrachte Element eine initial ebene Form hat und verformt wird, um sich an die Korrekturgeometrieoberfläche der Form anzuschmiegen.

12. Verfahren nach Anspruch 10 oder 11, wobei das angebrachte Element an der Korrekturgeometrieoberfläche der Form mittels eines Klebstoffs festgelegt ist.

13. Verfahren nach Anspruch 8, wobei die mikrostrukturierte Schicht gebildet ist durch Aufbringen einer Materialschicht auf die Oberfläche der Form mit Korrekturgeometrie, wobei das Material geeignet ist, die Ausbildung einer Mikrostruktur auf ihrer Oberfläche zu erlauben, die der Oberfläche mit Korrekturgeometrie der Form entgegengesetzt ist.

14. Verfahren nach irgendeinem der Ansprüche 1 bis 13, wobei die Schicht des ersten härtbaren, optischen Materials erlangt wird durch Anwendung einer flüssigen Zusammensetzung von optischen Monomeren auf die Form.

15. Verfahren nach irgendeinem der Ansprüche 1 bis 13, wobei die Schicht des ersten härtbaren, optischen Materials gebildet wird durch Injektion eines thermoplastischen Materials.

16. Verfahren nach irgendeinem der Ansprüche 9 bis 12, wobei die Mikrostruktur auf einer Fläche eines verformbaren, ebenen Einsatzes ausgebildet wird, wobei der Einsatz in der Form verformt wird, um sich an die Oberfläche mit Korrekturgeometrie der Form anzuschmiegen.

17. Verfahren nach Anspruch 16, wobei der Einsatz in der Form durch Erzeugen eines Vakuums an einer Fläche des

Einsatzes, die der die Mikrostruktur tragende Fläche des Einsatzes entgegengesetzt ist, verformt wird.

**18.** Verfahren nach Anspruch 16, wobei der Einsatz in der Form durch Erzeugen eines Drucks an der Fläche des Einsatzes, die die Mikrostruktur trägt, verformt wird.

**19.** Verfahren nach Anspruch 18, wobei der Druck der Fließdruck des zweiten optischen Materials ist.

**20.** Verfahren nach Anspruch 18, wobei der Druck der Injektionsdruck des zweiten Materials ist.

**21.** Verfahren nach irgendeinem der vorangehenden Ansprüche, wobei das aus dem zweiten härtbaren, optischen Material gebildete Substrat erhalten wird durch Gießen einer flüssigen Zusammensetzung von optischen Monomeren oder durch Injektion eines optischen thermoplastischen Materials.

**22.** Ophthalmische Linse, die eine Antireflexmikrostruktur aufweist, die initial durch ein Interferenzverfahren bestimmt wird, die einer Oberfläche der Linse verliehen wird, die eine Sichtkorrekturgeometrie hat, **dadurch gekennzeichnet, dass** die die Mikrostruktur aufweisende Oberfläche eine Oberfläche einer abriebfesten Schicht ist.

**23.** Linse gemäß Anspruch 22, wobei die die Mikrostruktur aufweisende Oberfläche einen Refraktionsindex von gleich oder größer als 1,55, vorzugsweise gleich oder größer als 1,6 hat.

## Claims

**1.** Method for obtaining an ophthalmic lens comprising a surface antiglare utility microstructure, said method comprising a step for transferring the microstructure in a surface of the lens from a mould (1) an internal surface (3,3') of which supports the microstructure and has a sight-correcting geometry, the microstructure geometry being initially determined by an interferential method, the transfer step comprising:

- forming in the mould a layer of a first liable to be cured optical material a surface of which supports a replica of the utility microstructure supported by the internal face of the mould, said first optical material giving after curing a hard coating with abrasion resistance properties,
- curing the layer of the first optical material in the mould,
- introducing between the surface of the cured layer of the first optical material opposed to the surface supporting the microstructure and a mould wall, a second liable to be cured optical material,
- curing the second optical material, and
- dismantling the mould to recover an ophthalmic lens comprising a substrate formed with the second optical material a surface of which is covered with the cured layer of the first optical material supporting the utility microstructure.

**2.** Method according to claim 1, wherein the microstructure geometry is periodical.

**3.** Method according to claim 2, wherein the periodical microstructure has a period comprised between 100 and 300 nm.

**4.** Method according to any one of claims 1 to 3, wherein the sight-correcting geometry surface is a progressive geometry surface.

**5.** Method according to any one of claims 1 to 4, wherein the bending radius of the surface is comprised between 40 and 100 nm.

**6.** Method according to any one of claims 1 to 5, wherein the mould is an integral mould and the microstructure is formed directly on the mould internal surface having the correcting geometry.

**7.** Method according to claim 6, wherein the mould is formed with plastic, metal or mineral glass.

**8.** Method according to any one of claims 1 to 5, wherein the mould is a composite mould having at least two layers one of which supports at the surface thereof the utility microstructure.

**9.** Method according to any one of claims 1 to 5, wherein the microstructure is formed on one face with an insert, said

insert suiting to the mould surface having the sight-correcting geometry.

**10.** Method according to claim 9, wherein the insert has a shape corresponding to this of the sight-correcting geometry surface of the mould and is secured with this surface.

**11.** Method according to claim 9, wherein the insert has an initially plane shape and is distorted to suit to the correcting geometry surface of the mould.

**12.** Method according to claim 10 or 11, wherein the insert is secured with the correcting geometry surface of the mould through an adhesive.

**13.** Method according to claim 8, wherein the microstructured layer is formed by application of a material layer onto the correcting geometry surface of the mould, said material being adapted to allow the development of a microstructure on its surface opposed to the correcting geometry surface of the mould.

**14.** Method according to any one of claims 1 to 13, wherein the layer of the first liable to be cured optical material is obtained by application on the mould of a liquid composition of optical monomers.

**15.** Method according to any one of claims 1 to 13, wherein the layer of the first liable to be cured optical material is made by injection of a thermoplastic material.

**16.** Method according to any one of claims 9 to 12, wherein the microstructure is formed on a face with a deformable plane insert, said insert being distorted in the mould to suit to the correcting geometry surface of the mould.

**17.** Method according to claim 16, wherein the insert is distorted in the mould by creation of a vacuum on a face of the insert opposed to the insert face supporting the utility microstructure.

**18.** Method according to claim 16, wherein the insert is distorted in the mould by creation of a pressure on the insert face supporting the utility microstructure.

**19.** Method according to claim 18, wherein the pressure is the casting pressure of the second optical material.

**20.** Method according to claim 18, wherein the pressure is the injection pressure of the second material.

**21.** Method according to any one of the previous claims, wherein the substrate made of the second liable to be cured optical material is obtained either by casting a liquid composition of optical monomers or by injection of an optical thermoplastic material.

**22.** Ophthalmic lens comprising an antiglare utility microstructure initially determined by an interferential method imparted into a surface of the lens with a sight correcting geometry, **characterised in that** the surface having the utility microstructure is a surface of a layer with abrasion resistance.

**23.** Lens according to claim 22, wherein the surface comprising the utility microstructure has a refraction index equal to or higher than 1.55, preferably equal to or higher than 1.6.

FIG.1

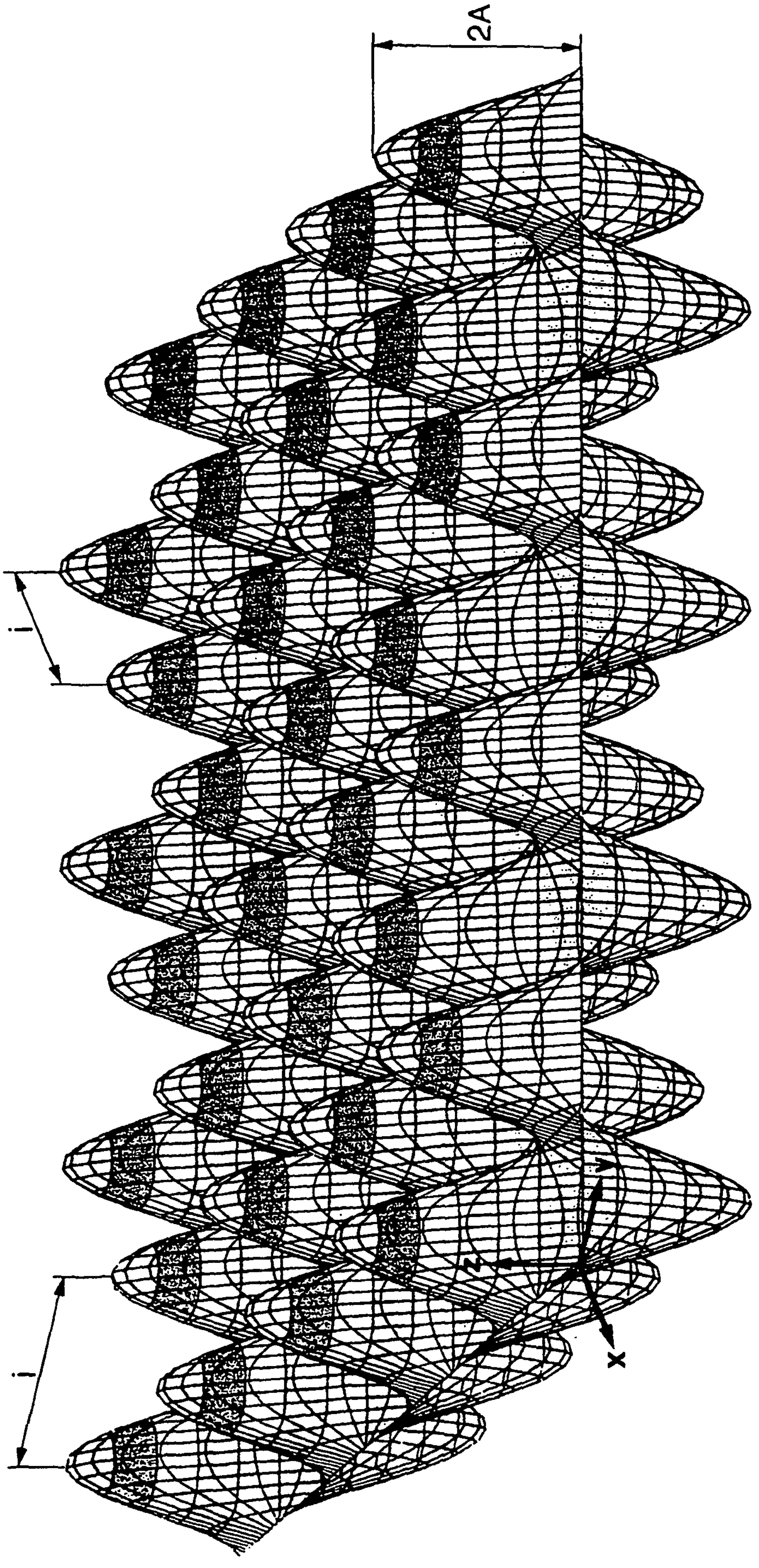

FIG.3

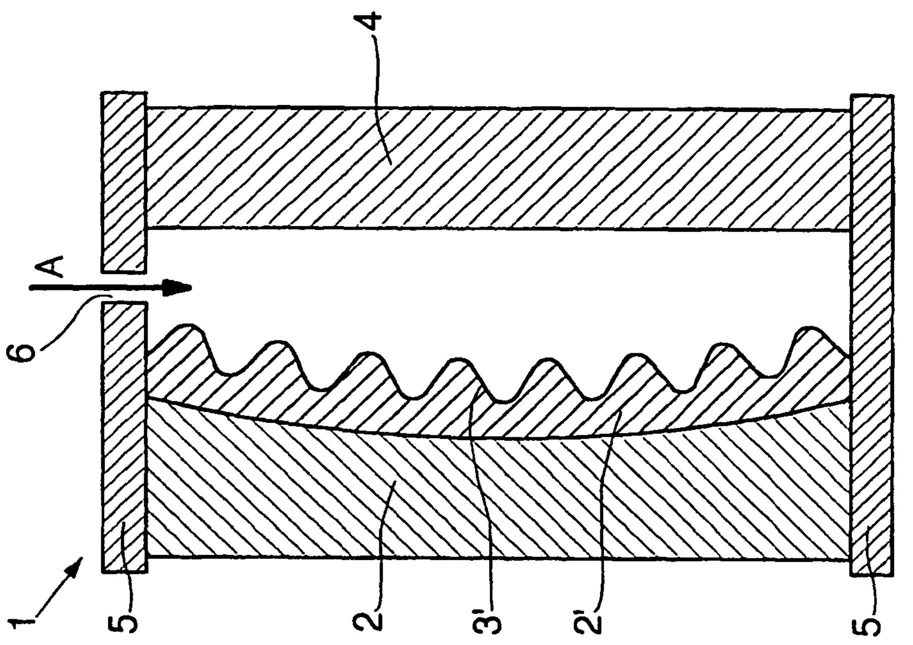


FIG.2

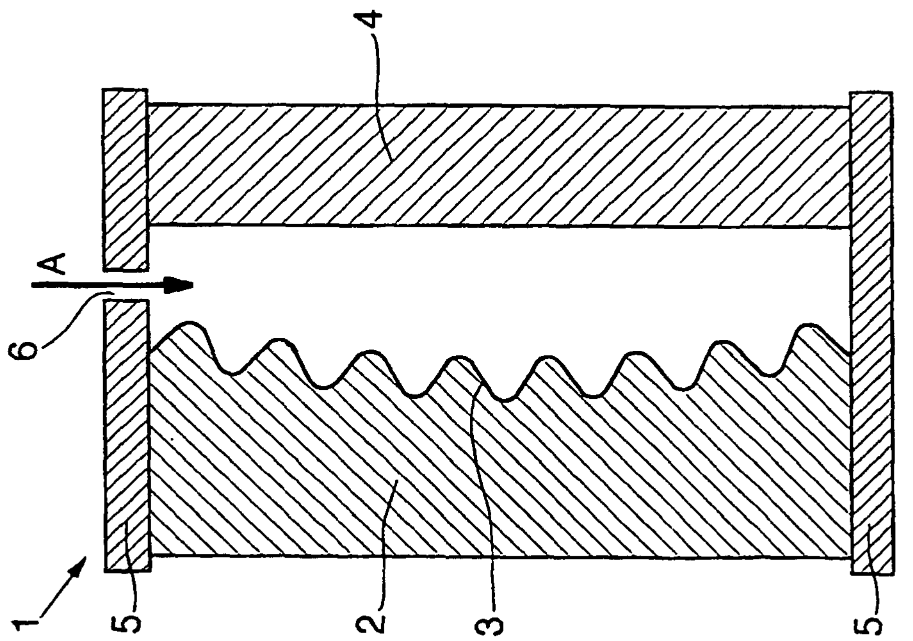

FIG.4

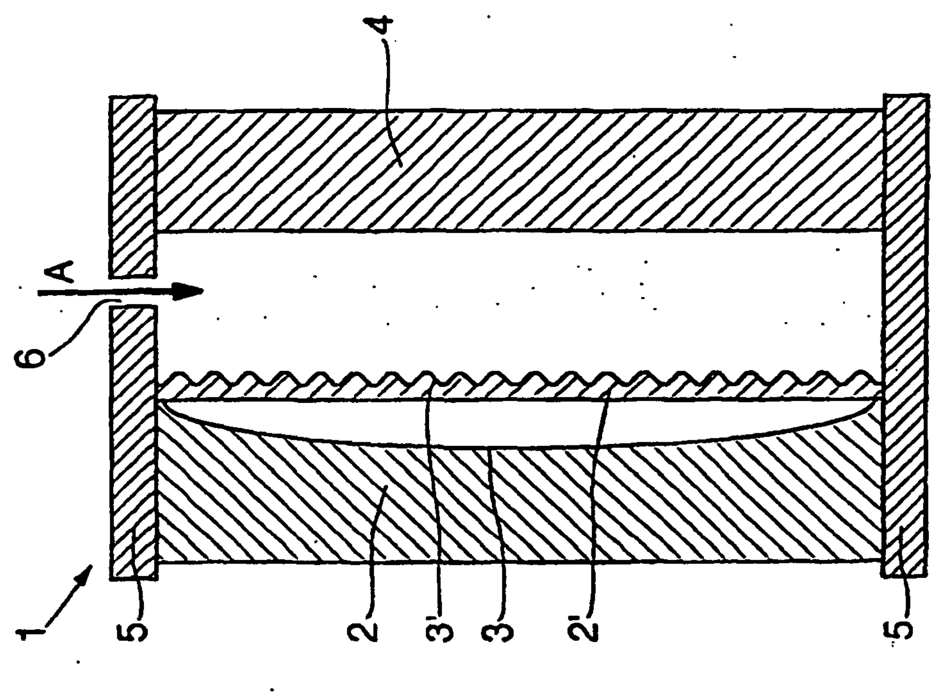

FIG. 5